# EUROPEAN PATENT SPECIFICATION

(11) **EP 2 916 698 B1**
(45) Date of publication and mention of the grant of the patent: **18.07.2018**
(21) Application number: 12818640.0
(22) Date of filing: 09.11.2012
(51) Int. Cl.: B65D 85/804, A47J 31/36

(54) **SYSTEM FOR DISPENSING BEVERAGES**
SYSTEM ZUR AUSGABE VON GETRÄNKEN
SYSTÈME DE DISTRIBUTION DE BOISSONS

(43) Date of publication of application: 16.09.2015
(73) Proprietor: Paolini, Cristiano, 50019 Sesto Fiorentino (FI) (IT)
(72) Inventor: Paolini, Cristiano, 50019 Sesto Fiorentino (FI) (IT)
(74) Representative: Cacciamani, Clizia
(86) International application number: PCT/IT2012/000340
(87) International publication number: WO 2014/073009

(56) References cited:
- EP-A2- 1 658 796
- WO-A1-2012/104760
- BE-A- 343 195
- DE-U- 7 430 109

## Description

### Field of the Invention

The present invention relates to systems for dispensing beverages from solid substances, generally in powdery form, and liquid substances which can be used for infusing and/or dissolving said solid substances. Particularly, the invention relates to a system for dispensing beverages, to an apparatus for preparing the beverages to be dispensed comprising pre-packaged pods which can be used in said apparatus to obtain the beverages to be dispensed.

### State of the Art of the Invention

Beverage dispensing systems, particularly hot beverage dispensing systems, have long been known and widely used which are based on the use of a pre-packaged pod filled with a solid substance which is usually dissolved or infused into a liquid which is properly conditioned, i.e. heated and brought to certain conditions of temperature and pressure so as to allow said beverage to be dispensed. Particularly, a great development has been achieved in this field for the machines intended for the preparation of infusions from coffee powder, i.e. the so-called espresso coffee machines which make use of pre-packaged pods filled with coffee powder. Most of these systems contemplate the use of an apparatus provided with an infusion chamber having positioned therein a pre-packaged pod whose one side communicates with means for dispensing the infusion and the other side communicates with means for supplying pressurized hot water which is supplied into the pre-packaged pod in order to extract the coffee infusion.

Without considering the type of pre-packaged pod being used and the system for extracting the infusion, this type of devices generally comprises a tank for storing water, a boiler or heating water, and a pump for supplying water to the boiler. Usually, the water used is from the water network, and therefore it contains substances and micro-organisms forming sediments which can cause various kinds of problems to all the components of the system thereby reducing both the life of the apparatus and especially the quality of the product, i.e. the infusion, which quality is obviously strictly related to the water from which the infusion is prepared.

Consequently, the maintenance of the system is extremely important to obtain a proper operation of the apparatus, and therefore a good quality of the infusion product. Furthermore, while a continued use of the system results in the build-up of sediments and requires maintenance, a prolonged disuse also entails a number of problems owing to the fact that the solidified build-up of sediments can obviously lead to a functional failure of the apparatus. Hence, the choice of reducing the size of the tank, apart from providing a decreased supply of liquid substance, does not eliminate the problem of deterioration of the parts coming into contact with the liquid substances, and especially with water.

European Patent Application published as EP 1 658 796 A2 discloses a machine for producing a drinkable food like coffee, tea, shake, soup or such alike, on basis of an ingredient like e.g. tea leaves, coffee or soup powder etc. and of a drinkable fluid like water, milk or such alike, whereby before production of the food and during the production and after the production neither the fluid nor the food ingredient is ever in direct contact with the machine itself.

Therefore, an aim of the present invention is to provide a beverage dispensing system which can avoid the use of water tanks of significant sizes with respect to the size of the machine while allowing both the heating means and the water supply means of the infusion chamber to be maximally optimized.

A further aim of the present invention is to provide a beverage dispensing system which makes use of an apparatus extremely simplified in structure and requiring little or no maintenance.

Still another aim of the present invention is to provide a beverage dispensing system which makes use of pre-packaged charges allowing for the preparation of a wide range of beverages, mainly hot beverages, although the preparation of a coffee infusion is preferred.

### Object of the Invention

Accordingly, an object of the invention is a system for dispensing beverages from solid substances and liquid substances used to infuse and/or dissolve said solid substances as defined in independent claim 1. A further object of the present invention is an apparatus for preparing and dispensing beverages, said apparatus comprising dispensing means, means for heating the liquid substances and means for supplying the liquid substances, there being provided an infusion chamber capable of accommodating at least one pre-packaged pod filled with a solid substance and at least one pre-packaged pod filled with a liquid substance, the supply means being adapted to cooperate with said pre-packaged pod filled with liquid substance.

In a preferred embodiment, said heating means comprise a tubular member communicating with said pre-packaged pod filled with liquid substance, the tubular member being provided with heating members such as resistors, inductors, or the like.

In another embodiment, said means for supplying the liquid substance comprise pressure means cooperating with said pre-packaged pod filled with liquid substance, said pod being deformable. Said pressure means can be mechanical, electromechanical or pneumatic in nature, and they can be operated manually or automatically.

A set of pre-packaged pods is used for the preparation of beverages, said set comprising a pre-packaged pod filled with a liquid substance and a pre-packaged pod filled with a solid substance, said pre-packaged pods being formed in such a way as to be able to communicate with each other either directly or indirectly; the substances contained in both the pods being in amounts commensurate to the appropriate amount of the resulting beverage. In one embodiment, said pre-packaged pod filled with liquid substance comprises a container body whose walls can be deformed so as to change the internal volume of said pod. In a variant embodiment, said walls are collapsible and are preferably formed as a bellows or the like; in another variant embodiment, one of the walls can be sealingly moved with respect to the other walls. Furthermore, said pre-packaged pod filled with liquid substance should be able to communicate with said pre-packaged pod filled with solid substance.

A pre-packaged pod comprising a first container for a solid substance and a second container for a liquid substance is used for the preparation of beverages, said containers being connected to each other and there being provided coupling means between said first container and said second container for allowing said containers and their respective contents to communicate with each other.

### Brief Description of the Drawings

Further advantages and features of the system according to the present invention will be apparent from the following detailed description of certain embodiments thereof, which is provided by way of a non-limiting example with reference to the accompanying drawings, in which:
Figure 1 is a schematic side elevation view of a first embodiment of the system according to the present invention;
Figure 2 is a schematic side elevation view of a second embodiment of the system according to the present invention;
Figure 3 is a schematic side elevation view of a third embodiment of the system according to the present invention;
Figure 4 is a cross-sectional view taken along line IV-IV of Figure 3;
Figure 5 is a cross-sectional view of a specific variant embodiment of the apparatus for the system according to the present invention;
Figures 6A, 6B and 6C are three variant embodiments of the apparatus for the system according to the present invention;
Figure 7 is a side elevation view, with parts in section, of a further embodiment of the system according to the present invention; and
Figures 8A, 8B, 8C and 8D represent the various operational steps of a further embodiment of the system according to the present invention.

### Description of Some Embodiments of the Invention

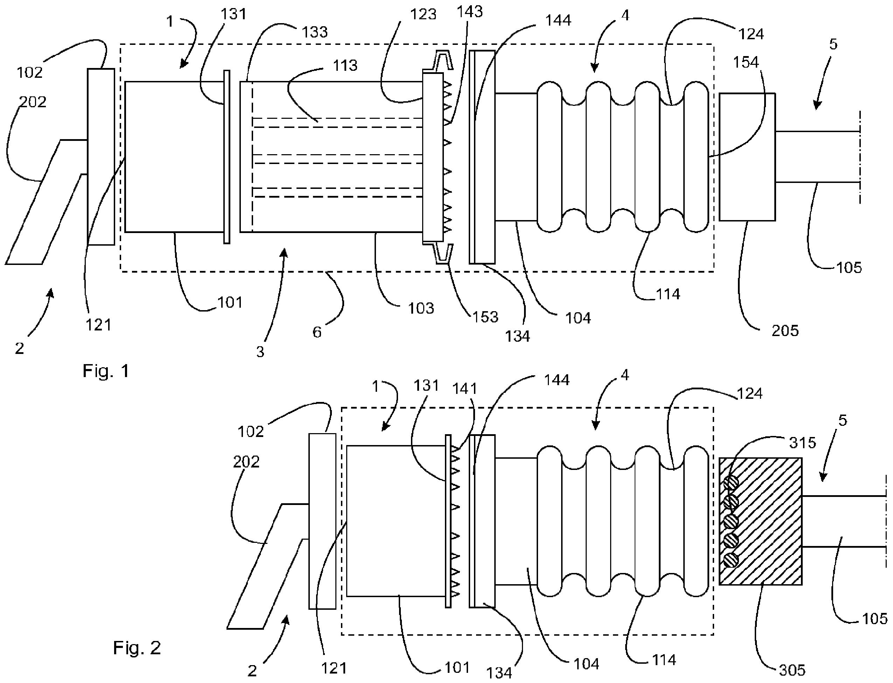

In Figure 1, there is illustrated a first embodiment of the system according to the present invention; reference numeral 1 denotes a pre-packaged pod containing a solid substance, particularly coffee powder. Said pod 1 comprises a container body 101 provided with a bottom wall 121 and a closure surface 131; the pod is positioned between a dispensing assembly 2 comprising a collection manifold 102 and a dispensing duct 202, and a heating assembly 3 provided with a heating body 103 having formed therein ducts 113 allowing a supply manifold 123 to communicate with a discharge manifold 133 which is opposite to said pre-packaged pod 1. The heating body 103 is also provided with piercing means 143 arranged on the surface of the supply manifold 123 and opposite to a pre-packaged pod 4 containing a liquid substance, in this case water. Elastic means 153 are placed laterally to the manifold 123 and opposite to said pod 4. The pod 4 comprises a container body 104 whose side walls are provided with ridges 114 and recesses 124 so as to be deformable. The container body has an annular flange 134 having arranged thereon a closure surface 144; the container body is provided with a bottom wall 154 at the opposite end thereof. This bottom wall 154 of the container body 104 cooperates with a supply assembly 5, i.e. with a head 205 of an actuator 105. The pre-packaged pod 1 filled with coffee powder, the heating assembly 3 and the pre-packaged pod 4 filled with water are all positioned within an infusion chamber 6 as shown in dashed line.

In Figure 2, there is illustrated a second embodiment of the system according to the present invention; like parts are referred to by like numerals. In this case, the closure surface 131 of the pre-packaged pod 1 filled with coffee powder has formed thereon piercing means 141 adapted to cooperate with the closure surface 144 of the pod 4 filled with water. Heating means 315 are accommodated within a head 305 of the actuator 105; both the pre-packaged pod 1 and the pre-packaged pod 4 are arranged within the infusion chamber 6.

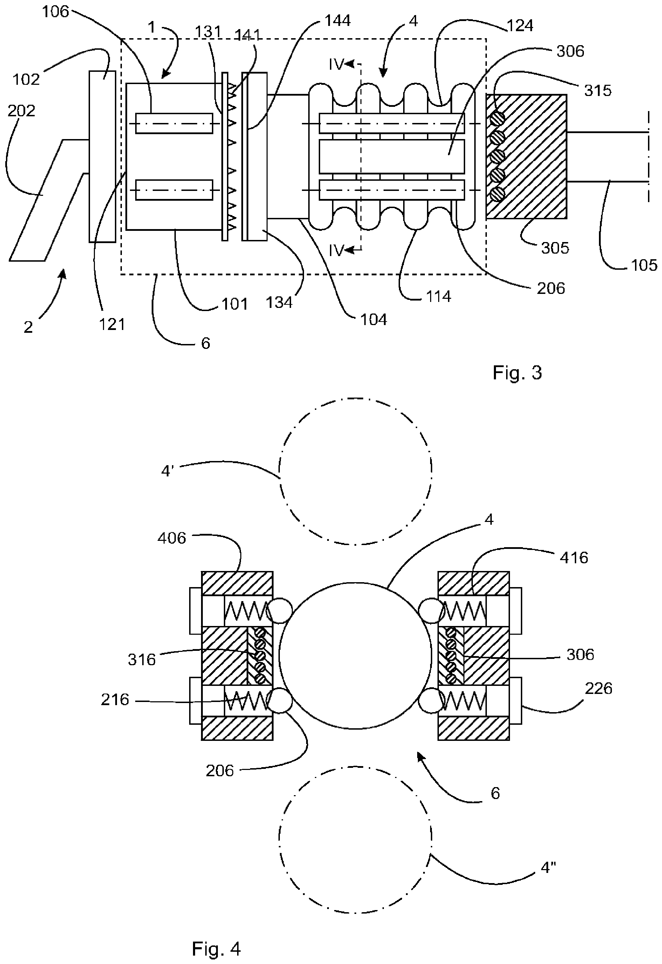

In Figure 3, there is illustrated a third embodiment of the system of the invention; like parts are referred to by like numerals. As can be seen, the side walls of the infusion chamber 6 have arranged thereon support means 106 and 206 at the pre-packaged pod 1 and the pre-packaged pod 4, respectively. Furthermore, a heating plate 306 is arranged between the support means 206 to cooperate with the heating means 315 of the head 305 of the actuator 105. From the cross-section of Figure 4, it can be better understood how the support means 206 are positioned, said support means being abutted against springs 216 fitted in through-holes 416 formed in the side walls 406 of the infusion chamber 6. Said side walls have also fitted therein heating plates 306 provided with resistors 316; dash-and-dot lines represent pods 4', 4" as viewed before and after their passage through the infusion chamber, respectively.

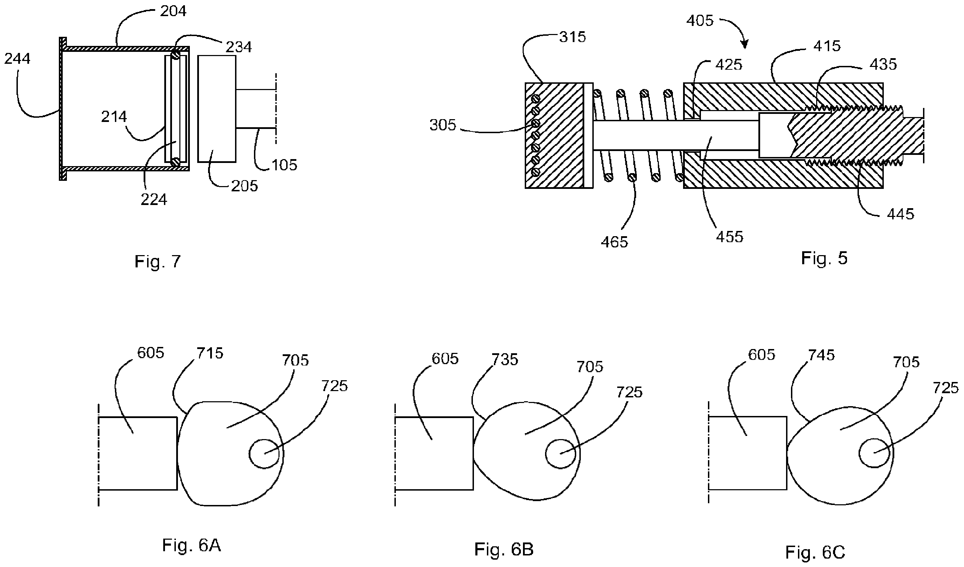

In Figure 5, there is illustrated a variant embodiment of the supply assembly of the apparatus provided in the system of the present invention. In this case, the actuator 405 includes a bushing 415 having formed a throughhole 425 in the bottom wall thereof and provided with an internal thread 435 intended to cooperate with a thread 445 of a stem 455 supporting the head 305 provided with the heating means 315. By turning the stem, the head 305 is moved towards or away from the bushing 415 so as to change the amount of compression of the spring 465 disposed between the above-mentioned members.

In Figures 6A to 6C, there are illustrated three variant embodiments of the apparatus for the system according to the present invention; in Figure 6A, the actuator 605 of the supply means 5 is coupled with a cam 705 having a shape 715 rotating about a shaft 725 and provided with drive means, not shown in the Figure; Figures 6B and 6C show similar arrangements except that the cam 705 has a shape 735 in Figure 6B and a shape 745 in Figure 6C.

In Figure 7, there is illustrated another variant embodiment of the system according to the present invention; like parts are referred to by like numerals. In the Figure, the head 205 of the actuator 105 of the supply assembly 5 can act on the bottom wall 214 of the container body 204 of the pre-packaged pod 4 filled with water; said bottom wall 214 is movable with respect to the side walls of the container body 204, and it is provided with an annular groove 224 having accommodated therein a sealing means 234 which allows it to be moved along said side walls. The container body 204 has a closure surface 244 at the opposite end thereof.

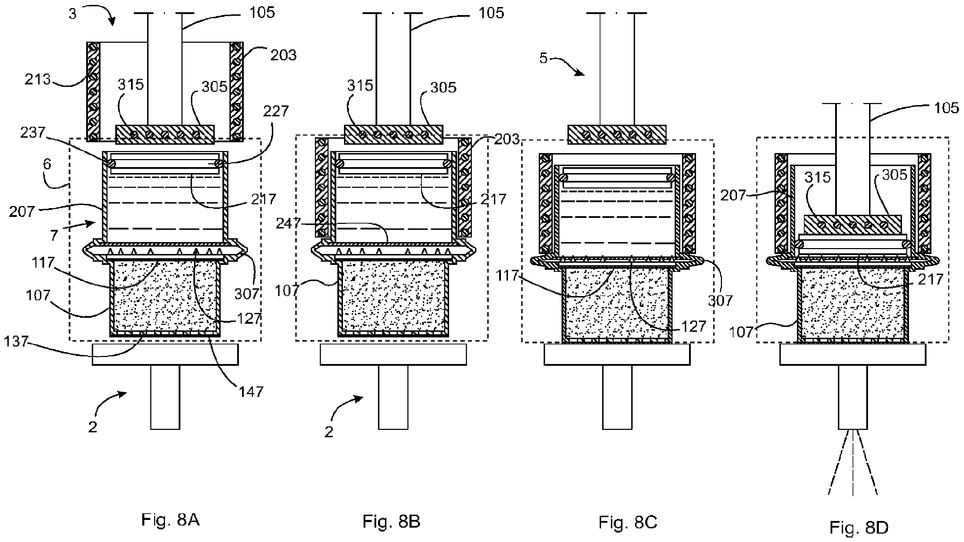

In Figures 8A to 8D, there is shown a further embodiment of the system according to the present invention; the infusion chamber 6, as also shown in dashed line, has accommodated therein a pre-packaged pod 7 comprising a first container body 107 adapted for containing coffee powder and provided with an outwardly facing bottom wall 137 having formed therein a plurality of through-holes 147. The wall 117 at the opposite end of said container body 107 includes piercing means 127 adapted to cooperate with the closure surface 247 of the second container body 207 adapted for containing water. The bottom wall 217 of the container body 207 is sealingly movable along the side walls of the container body 207 due to a member 237 fitted in the annular groove 227 formed in said bottom wall 217. Said first container body 107 and said second container body 207 are connected by flexible connecting means 307.

In this case, the heating assembly 3 comprises a sleeve 203 which is movable along a direction parallel to the axis of said pre-packaged pod 7 and provided with a plurality of heating means 213. The actuator of the supply assembly 5 is equipped with a head 305 provided with heating means 315.

The operation of the system according to the present invention will become apparent from the following. With reference to the embodiment illustrated in Figure 1, the beverage dispensing system according to the present invention comprises the pre-packaged pods 1 and 4 containing a solid substance and a liquid substance, respectively. Said solid substance contained in said first pre-packaged pod 1 may be a particulate solid in various forms such as granules, powder or coarse particles, and particularly, in the above-described embodiments, it is coffee; said solid substance is to be contacted with a liquid substance, preferably a heated liquid substance and usually water, which is contained in the second pre-packaged pod 4. The two pre-packaged pods are intended to cooperate with an apparatus comprising an infusion chamber 6 in which the charges are to be positioned, a dispensing assembly 2, a heating assembly 3, and a supply assembly 5. The highly innovative feature of the system according to the present invention is the absence of a tank for storing water, which tank is usually present in most of the beverage-making machines.

On the contrary, in this case, the liquid substance, i.e. water, is contained in a pre-packaged pod 4 from which it will be supplied into the pod 1 and contacted with the coffee powder contained therein. To this aim, the infusion chamber 6 is provided with a heating assembly 3 comprising a heating body 103 which communicates at one end with said pod 4 filled with liquid substance through a supply manifold 123, and at the other end with said pod 1 filled with solid substance through a discharge manifold 133. The two manifolds communicate with each other through a plurality of channels 113 formed in the heating body 103. The manifold 123 is provided with piercing means 143 allowing the closure surface 144 of the pod 4 filled with water to be perforated. The pod 4 is compressed against the manifold 123 under the action of the head 205 of the actuator 105, and the flowing-out water is pushed towards the channels 113 of the heating body. From here, water travels through the manifold 133 and penetrates the wall of the closure surface 131 of the pod 1 filled with coffee powder so as to infuse the powder. The infusion is collected within the manifold 102 of the dispensing assembly 2, and it is moved from here to the dispensing duct. At this time, the actuator is retracted from the supply assembly 5, and subsequently, the elastic means 153 arranged around the manifold 123 allow the pod 4 to be easily detached from the heating body 103.

The heating body 103 is realized in such a way as to achieve a heating capacity commensurate to the requirements of volume of water and temperature of use. The pressure exerted by means of the actuator 105 can be applied mechanically and the actuator can be completely manually operated, however, the actuator 105 could be also an electromechanical, hydraulic or pneumatic actuator which could be operated electronically.

The pre-packaged pod 4 has been realized in such a way as to be able to accommodate its deformation under the action of the head 205 of the actuator 105. Particularly, the side wall of the container body 104 is formed with a series of alternating annular ridges 114 and recesses 124 in such a way that the container body can be deformed as a "bellows" so as to provide a decreased resistance against the action of said actuator 105. The bottom wall is continuous as is the closure surface, which will be advantageously made of a material which can be easily perforated by the piercing means 143. Generally, the pre-packaged pod 4 can be made of any material suitable for containing food and able to be deformed without applying an excessive amount of pressure; particularly, it can be made of a synthetic plastic material, a metal material, or a plastic-metal multilayer material.

The pre-packaged pod 1 filled with coffee powder can be made of a plastic material, a metal material, or a plastic-metal multilayer material. The bottom wall and the closure surface can be provided with openings, or they can be continuous; in the latter case, piercing means, not shown in the Figure, should be provided on both the heating body 103 and the manifold 102 of the dispensing assembly 2.

In the embodiment illustrated in Figure 2, the heating assembly 3 has been eliminated and the two pre-packaged pods 1 and 4 communicate directly with each other. To this aim, the closure surface 131 of the pre-packaged pod 1 has piercing means 141 cooperating with the closure surface 144 of the pod 4 so as to allow water to flow into the pre-packaged pod 1, thereby infusing the coffee. The heating means 315 positioned in the head 305 of the actuator substantially act on the bottom wall of the body 104 of the pod 4.

In Figure 3, there is illustrated an embodiment of the system of the present invention in which, in order to control the positioning of the pre-packaged pods 1 and 4 within the infusion chamber 6, the side wall 406 of the chamber has been provided with support means to improve the stability of the pods when the actuator 105 is acting thereon while allowing new pods to be easily inserted by simply pushing them against the exhausted pods, as is apparent from Figure 4. The support means, which are two sets of cylindrical rollers 106 and 206, cooperate with the charging means 216 to push the pods 1, 4 and centre the positioning thereof. When the new pod is replaced for the exhausted pod, the latter is dropped from the chamber 6. Advantageously, the support means 206 cooperating with the pod 4 are provided with heating means 306 in order to provide a more efficient heating of the liquid contained in said pod 4.

With reference to the embodiments illustrated in Figures 5 and 6A to 6C, particular attention has been drawn to the ability of controlling how the pressure is imparted from the actuator to the pre-packaged pod 4. On one hand, the transmission of the driving movement can be changed in stiffness by adjusting the amount of loading of the spring 465 cooperating with the head 305. On the other hand, as seen from Figures 6A to 6C, the speed of compression of the pod 4 can be controlled, for example, by using a cam with a particular shape which is rotated about its shaft to impart a certain driving movement to the actuator 605.

In the embodiment illustrated in Figure 8A, a single pre-packaged pod 7 is used which comprises two independent container bodies which are connected to each other by suitable connecting means. The heating means comprise the movable sleeve 203 and the head 305 of the actuator 105. As is apparent from Figure 8B, the sleeve 203 is moved up to completely surround the container body 207 filled with water. When the appropriate temperature has been reached, the sleeve 203 is further lowered in such a way that the connecting members 307 are compressed and therefore the closure surface 247 of the container 207 is perforated by the piercing means 127, as is apparent from Figure 8C. Then, the actuator 105 acts on the movable bottom wall 217 to force water - which is appropriately heated - to flow into the coffee powder (see Fig. 8D) in order to prepare an infusion to be dispensed.

Thus, the beverage dispensing system according to the present invention provides an extremely simple and advantageous solution compared to the solutions available in the art. In fact, with this system, the construction features of the apparatus used for preparing the beverage to be dispensed are substantially simplified, and the substances are provided in a format easy to be handled and provided with excellent characteristics from the point of view of preservation.

Therefore, it will be possible to provide various properly packaged liquid substances and combine them with suitable solid substances, thus providing a wide range of combinations while avoiding adding complexity to the system in use. The containers of the two different pods can be advantageously packaged in a single pod which allows the solid substance and the liquid substance to be stored separately from each other.

## Claims

1. System for dispensing beverages from solid substances and liquid substances used to infuse and/or dissolve said solid substances, said system comprising: an apparatus for preparing and dispensing the beverages, the apparatus comprising dispensing means (2), heating means (3) for heating the liquid substances, supplying means (5) for supplying said liquid substances, a first pre-packaged pod (1) filled with a solid substance; and a second pre-packaged pod (4) filled with a liquid substance, said first pre-packaged pod (1) being able to be suitably coupled with said second pre-packaged pod (4) so as to allow the respective substances to be contacted with each other, and said second pod (4) being able to cooperate with said supplying means (5) for supplying said liquid substances, there being provided an infusion chamber (6) capable of accommodating at least one of said first pre-packaged pod (1) and at least one of said second pre-packaged pod (4), **characterized in that** said heating means (3) comprise a movable sleeve (203) which can be slidably moved within said infusion chamber (6) so as to be able to be fitted onto, and subsequently removed from, said second pre-packaged pod (4) filled with liquid substance.

2. Apparatus according to claim 1, wherein said heating means (3) comprise a tubular member (103) communicating with both said first pre-packaged pod (1) filled with solid substance and said second pre-packaged pod (4) filled with liquid substance, the tubular member (103) being provided with heating means (2) such as resistors, inductors or the like, and having formed therein ducts (113) in which said liquid substance is heated.

3. Apparatus according to any one of the preceding claims 1 to 2, wherein said supplying means (5) for supplying the liquid substance comprise pressure means (105, 205, 305) cooperating with said second pre-packaged pod (4) filled with liquid substance.

4. Apparatus according to claim 3, wherein said pressure means (105, 205, 305) can be mechanical, electromechanical or pneumatic in nature, and they can be operated manually or automatically.

## Patentansprüche

1. System zur Abgabe von Getränke aus festen Substanzen und flüssigen Substanzen, die verwendet werden, um besagte feste Substanzen aufzugießen und/oder aufzulösen, wobei besagtes System Folgendes umfasst: eine Vorrichtung für die Zubereitung und Abgabe von Getränken, wobei die Vorrichtung eine Abgabeeinrichtung (2), Heizeinrichtung (3) zum Erhitzen der flüssigen Substanzen, eine Zuführeinrichtung (5) zum Zuführen der besagten flüssigen Substanzen, einen ersten vorverpackten Beutel (1), der mit einer festen Substanz gefüllt ist; und einen zweiten vorverpackten Beutel (4), der mit einer flüssigen Substanz gefüllt ist, umfasst, wobei besagter erster vorverpackter Beutel (1) in der Lage ist, angemessen mit besagtem zweiten vorverpackten Beutel (4) verbunden zu werden, um zu ermöglichen, dass die jeweiligen Substanzen miteinander in Kontakt kommen und besagter zweiter vorverpackter Beutel (4) in der Lage ist, mit besagter Zuführeinrichtung (5) für das Zuführen der besagten flüssigen Substanzen zu kooperieren, wobei eine Infusionskammer (6) bereitgestellt wird, die in der Lage ist, mindestens einen der besagten ersten vorverpackten Beutel (1) und mindestens einen der besagten zweiten vorverpackten Beutel (4) aufzunehmen, dadurch ausgezeichnet, dass besagte Heizeinrichtung (3) eine bewegliche Muffe umfasst (203), die innerhalb der besagten Infusionskammer (6) gleitend bewegt werden kann, um auf besagtem zweiten vorverpackten Beutel (4), der mit flüssiger Substanz gefüllt ist, installiert und anschließend von ihm entfernt werden zu.

2. Vorrichtung gemäß Anspruch 1, wobei besagte Heizeinrichtung (3) ein rohrförmiges Bauteil (103) umfasst, das sowohl mit dem ersten vorverpackten Beutel (1), der mit fester Substanz gefüllt ist und besagtem zweiten vorverpackten Beutel (4), der mit flüssiger Substanz gefüllt ist, kommuniziert, wobei das rohrförmiges Bauteil (103) mit Heizeinrichtungen (2) wie Wiederständen, Induktoren oder dergleichen ausgerüstet ist und darin geformte Leitungen (113) enthält, in welchen besagte flüssige Substanz erhitzt wird.

3. Eine Vorrichtung gemäß einem der vorherigen Ansprüche 1 bis 2, wobei die Zuführeinrichtung (5) zum Zuführen der flüssigen Substanz eine Druckvorrichtung (105, 205, 305) umfasst, die mit besagtem zweiten vorverpackten mit Flüssigkeit gefüllten Beutel (4) zusammenwirkt.

4. Eine Vorrichtung gemäß Anspruch 3, wobei die Druckvorrichtungen (105, 205, 305) mechanisch, elektromechanisch oder pneumatisch sein können und manuell oder automatisch betätigt werden können.

## Revendications

1. Système de distribution de boissons à partir de substances solides et liquides, utilisé pour infuser et/ou dissoudre lesdites substances solides, ledit système comprenant les éléments suivants : un appareil pour préparer et distribuer les boissons, ledit appareil comprenant des moyens de distribution (2), des moyens de chauffage (3) pour réchauffer les substances liquides, des moyens d'alimentation (5) pour fournir auxdites substances liquides une première dosette préemballée (1) remplie d'une substance solide; et une deuxième dosette préemballée (4) remplie d'une substance liquide, ladite première dosette préemballée (1) pouvant être convenablement associée avec ladite deuxième dosette préemballé (4) de manière à ce que les substances respectives puissent entrer en contact l'une avec l'autre, et ladite deuxième dosette (4) pouvant coopérer avec lesdits moyens d'alimentation (5) pour fournir lesdites substances liquides, une chambre d'infusion (6) étant prévue, en mesure d'accueillir au moins une de ladite première dosette préemballée (1) et au moins une de ladite deuxième dosette préemballée (4), **caractérisé par le fait que** lesdits moyens de chauffage (3) comprennent un manchon mobile (203) qui peut être déplacé par coulissement à l'intérieur de ladite chambre d'infusion (6) de manière à pouvoir s'adapter sur ladite deuxième dosette préemballée (4) remplie de substance liquide, puis en être retiré.

2. Appareil selon la revendication 1, dans lequel lesdits moyens de chauffage (3) comprennent un élément tubulaire (103) communiquant avec ladite première dosette préemballée (1) remplie de substance solide et ladite deuxième dosette préemballée (4) remplie de substance liquide, l'élément tubulaire (103) étant équipé de moyens de chauffage (2) tels que des résistances, des inductances ou éléments similaires, et comportant des conduits internes (113) dans lesquels ladite substance liquide est chauffée.

3. Appareil selon l'une quelconque des revendications précédentes de 1 à 2, dans lequel lesdits moyens d'alimentation (5) fournissant la substance liquide comprennent des moyens de pression (105, 205, 305) coopérant avec ladite deuxième dosette préemballée (4) remplie de substance liquide.

4. Appareil selon la revendication 3 dans lequel lesdits moyens de pression (105, 205, 305) peuvent être mécaniques, électromécaniques ou pneumatiques par définition, et peuvent être actionnés manuellement ou automatiquement.
